# EUROPÄISCHE PATENTANMELDUNG

(11) **EP 4 252 971 A2**
(43) Veröffentlichungstag der Anmeldung: **04.10.2023**
(21) Anmeldenummer: 23152689.8
(22) Anmeldetag: 20.01.2023
(51) Int. Cl.: B25J 9/16, G05B 19/418

(54) **VERFAHREN ZUM BESCHLEUNIGEN EINER HANDHABUNGS-MASCHINE**

(30) Priorität: 29.03.2022 DE 102022107392
(71) Anmelder: Gerhard Schubert GmbH, 74564 Crailsheim (DE)
(72) Erfinder: Döring, Michael, 01099 Dresden (DE)
(74) Vertreter: Weickmann & Weickmann PartmbB

(57) **Zusammenfassung**

Um in einer Anwendungs-Umgebung (100) wie einer Roboter-Straße (100) zum Umsetzen von Produkten (P) die Steuerung der Roboter (1) möglichst schnell und dennoch exakt vornehmen zu können, wird erfindungsgemäß
- außerhalb der Anwendungs-Umgebung (100) mit Trainings-Bewegungs-Datensätzen der Roboter (1) eine Kl trainiert,
- in der Anwendungs-Umgebung (100) von der Kl nach Eingeben eines Arbeits-Auftrages als Anfragegrößen Bewegungs-Daten (ABD) für die Roboter (1) als Antwortgrößen ausgegeben, insbesondere in Echtzeit, die zur Beseitigung ihrer eventuellen Inkonsistenzen oder Unschärfen auch noch nachbearbeitet werden können.

## Beschreibung

### I. Anwendungsgebiet

Die Erfindung betrifft die Steuerung der Bewegung eines oder mehrerer zusammenarbeitender Roboter, insbesondere in der Verpackungstechnik.

### II. Technischer Hintergrund

Mithilfe des an einem Roboter befestigten Werkzeuges, häufig in Form eines Saugers, soll beispielsweise ein Objekt an einer Aufnahme-Stelle ergriffen, zu einer Ablage-Stelle bewegt und dort definiert abgelegt werden.

Das Werkzeug - im Folgenden ist nur noch von dem Sauger die Rede, ohne die Erfindung hierauf zu beschränken - kann bis zu 6 Freiheitsgrade haben, ist also in aller Regel in den 3 Raumrichtungen X, Y, Z verfahrbar und um die 3 Raumachsen A, B, C verschwenkbar.

Bei dem Roboter kann es sich um einen seriellen Roboter mit nur einem Roboterarm aus mehreren hintereinander, also seriell, aneinander gelenkig befestigten Armteilen handeln, der an seinem hinteren Ende an einer Roboterbasis befestigt ist und an seinem vorderen Ende einen Werkzeug-Träger oder das Werkzeug direkt - im Folgenden Werkzeug-Einheit genannt - trägt.

Bei dem Roboter kann es sich auch um einen Roboter mit Parallel-Kinemathek handeln wie etwa einem Delta-Roboter, bei dem mehrere, meist drei, Roboterarme jeweils mit ihrem hinteren Ende an einer meist gemeinsamen Roboterbasis befestigt sind und mit ihrem vorderen Ende an einer gemeinsamen Werkzeug-Einheit, die meist einen Werkzeug-Träger umfasst, der das Werkzeug trägt.

Es kann sich auch um eine Kombination aus serieller und paralleler Roboterkinematik handeln (hybride Kinematik).

Die von der Roboter-Basis zur Werkzeug-Einheit hintereinander angeordneten Armteile, aus denen auch die Roboterarme dieses Roboter-Typs bestehen, sind mit mindestens einem Freiheitsgrad gelenkig miteinander verbunden und/oder relativ zueinander verfahrbar und ebenso das erste Armteil an der Roboter-Basis und das letzte Armteil an der Werkzeug-Einheit.

Jede dieser Relativ-Bewegungen wird über einen Antrieb gesteuert durchgeführt, wobei ein mögliches Ziel darin besteht, den gewünschte Arbeitsauftrag des Roboters möglichst schnell zu vollziehen, damit die z.B. Verpackungs-Anlage - etwa eine Umsetz-Vorrichtung für Produkte von einem Produktband in die Behälter auf einem Behälterband mittels mehrerer hintereinander an den Bändern angeordneten Robotern in Form einer Roboter-Straße - möglichst effizient arbeitet, also pro Zeiteinheit möglichst viele solche Umsetz-Vorgänge absolviert. Auch andere Zielkriterien wie z.B. möglichst geringer Energieverbrauch, möglichst geringe Schwingungsanregung oder möglichst geringe mechanische Belastung zur Erhöhung der Dauerbeanspruchbarkeit und/oder Verringerung der Wartungsintervalle, können angewendet werden.

Da die Arbeits-Aufträge mit einem zeitlichen Vorlauf vor der Durchführung bekannt sind - bei einer Roboter-Straße zum Umsetzen von Produkten deshalb, weil ein Scanner stromaufwärts des Umsetzbereiches die Positionen und gegebenenfalls Drehlagen der Produkte auf dem, meist kontinuierlich, laufenden Behälter-Band detektiert und unmittelbar danach die Straßen-Steuerung die Arbeits-Aufträge den jeweiligen Robotern und gegebenenfalls deren Roboter-Steuerungen zuweisen kann - müssen die Bewegungsdaten für die Arbeits-Aufträge zwar nicht in Echtzeit mit der Vergabe der Arbeits-Aufträge ermittelt werden und vorliegen, sollen aber in der Regel nicht länger als 100 ms, besser nicht länger als 50 ms, besser nicht länger als 30 ms nach Vorliegen der Arbeits-Aufträge feststehen, um keine Verzögerungen in den Bewegungsabläufen der Roboter-straße und der einzelnen Roboter zu bewirken.

Die die Leistung der Verpackungs-Maschine, insbesondere die Umsetz-Leistung einer Roboter-Straße, begrenzende Parameter sind beispielsweise die Belastbarkeit der Lagerstellen und Linear-Führungen, die Antriebsleistung der Antriebe, die durch die Bewegungen in der Maschine erzeugten Schwingungen, die Belastbarkeit des Objektes und die Geschwindigkeit, mit der die Steuerung - meist ausgehend von bekannter oder mittels Scanner ermittelter Aufnahme-Stelle und Ablage-Stelle - den ideale Bewegungsweg und die Bewegungsdaten in Form von Steuerkommandos für die Antriebe der einzelnen daran beteiligten beweglichen Teile, insbesondere des Roboters, ermittelt. Der ideale Bewegungsweg muss dabei keineswegs der gerade Weg vom Startpunkt zum Zielpunkt z.B. des Werkzeuges sein.

Schwingungen in der Anlage können die Genauigkeit der Aufnahme und Ablage des Objektes ebenso negativ beeinflussen wie die Lebensdauer der Anlage.

### III. Darstellung der Erfindung

### a) Technische Aufgabe

Es ist daher die Aufgabe gemäß der Erfindung, die optimalen Roboter-Bewegungen hinsichtlich Effizienz des Roboters und/oder insbesondere auch weiterer Optimierungs-Ziele wie etwa der Lebensdauer der Anlage möglichst schnell und genau zu ermitteln und daraus möglichst schnell Steuerkommandos für die einzelnen Antriebe des mindestens einen Roboters zu erzeugen.

### b) Lösung der Aufgabe

Diese Aufgabe wird durch die Merkmale der Ansprüche 1 und 18 gelöst. Vorteilhafte Ausführungsformen ergeben sich aus den Unteransprüchen.

Bei einem Steuerungs-Verfahren zum Steuern der Bewegung eines Roboters, der in einer realen Anwendungs-Umgebung wie etwa einer Verpackungs-Maschine, typischerweise einer Roboter-Straße, eingesetzt ist, wird durch Steuern der Antriebe seiner relativ zueinander beweglichen Teile, etwa der Arm-Teile, der Roboter in der Gesamtheit seiner Bewegungen gesteuert, insbesondere die Bewegung des am freien Ende des Roboterarmes befestigten Werkzeuges, etwa eines Greifers, insbesondere Saugers.

Für die Lösung der bestehenden Aufgabe werden gemäß **Schritt A)** in einem Vorberechnungsprozess aus bisher abgearbeiteten Arbeits-Aufträgen und deren Auftrags-Daten eine Vielzahl von möglichen, in diesen Arbeit-Aufträgen enthaltenen, insbesondere typischen, Bewegungs-Abschnitte von Bewegungen eines Roboters, etwa Absenken, Greifen, Anheben, Verfahren, oder auch ganze Arbeits-Aufträge, ermittelt und die Berechnung der optimierten Bewegungs-Wege, insbesondere Bewegungs-Abschnitte und Abschnitts-Bewegungsdaten hierfür vorab durchgeführt. Dies erfolgt nicht in zeitlichem Zusammenhang, insbesondere nicht in Echtzeit, mit konkreten vorliegenden Arbeits-Aufträgen an den Roboter in einem Vorberechnungsprozess. Die Ermittlung wird meist klassisch, insbesondere deterministisch, durchgeführt, etwa berechnet mittels Berechnungs-Algorithmen unter Nutzung von Optimierungsverfahren.

Dies für eine große Anzahl von Beispiel-Arbeitsaufträgen, also Bewegungs-Abschnitte von Robotern, durchzuführen, beansprucht eine hohe Rechenleistung und viel Rechenzeit, weshalb es vorab durchgeführt wird, also vor Ingangsetzen der Anlage, also der realen Anwendungs-Umgebung, und meist auch mit einem leistungsstärkeren EDV-System als dem Steuerungs-Computer der Anwendungs-Umgebung, etwa der Roboter-Straße.

Im Grunde gilt: Je mehr (sinnvolle) Parameter für die Berechnung der optimalen Bewegungs-Daten zur Verfügung gestellt werden können und bei der Berechnung der optimalen Bewegungs-Daten berücksichtigt werden können, umso größer ist der Rechenaufwand, umso höher wird aber auch der Optimierungsgrad der Bewegungs-Daten hinsichtlich der bestehenden Ziel-Parameter, etwa reales Maschinenverhalten und/oder Umgebungsverhalten und/oder Produktverhalten in der Anwendungsumgebung, sein und damit die erzielbare Leistung der Verpackungs-Maschine, etwa gemessen in der Anzahl von Umsetz-Vorgängen pro Zeiteinheit bei einer Umsetz-Vorrichtung wie einer Roboterstraße.

Wie anhand der Figuren erläutert ergeben sich dadurch sehr schnelle Bewegungen der Roboter, die aber nicht immer den vermuteten kürzesten Weg zwischen Start- und Zielpunkt nehmen müssen.

Gemäß **Schritt B)** wird unter Verwendung der beispielhaften Trainings-Auftrags-Daten und daraus errechneten optimierten Trainings-Bewegungsdaten als Trainings-Daten eine trainierte künstliche Intelligenz (KI), insbesondere ein mit Machine-Learning-Verfahren trainiertes Machine-Learning-Modell (MLM) welches beispielsweise ein künstliches neuronales Netz (KNN) umfasst und insbesondere eine Trainings-Einheit, trainiert.

Gemäß **Schritt C)** werden für die Durchführung eines konkreten, in der Anwendungs-Umgebung vorliegenden Arbeits-Auftrages in Form eines oder mehrerer Bewegungs-Abschnitte - der Arbeit-Auftrag kann also auch nur einen einzigen Bewegungs-Abschnitt umfassen - für einen Roboter diese Auftrags-Daten als Anfragegrößen in die trainierte KI eingegeben, die daraufhin als Antwortgrößen Abschnitts-Bewegungsdaten ausgibt, die zumindest als Roh-Abschnitts-Bewegungsdaten verwendet werden können.

Die Abschnitts-Bewegungsdaten können von ihrem Aufbau her, also qualitativ, den Vorberechnungs-Abschnitts-Bewegungsdaten des Schrittes A entsprechen und dieselben Informationen enthalten, aber quantitativ davon abweichen.

Die Roh-Abschnitts-Bewegungsdaten können sich qualitativ von den Vorberechnungs-Abschnitts-Bewegungsdaten des Schrittes A unterscheiden und nicht alle von deren Informationen enthalten, aber die fehlenden Informationen können aus diesen Roh-Abschnitts-Bewegungsdaten erzeugt werden, beispielsweise die Steuerkommandos.

Diese Ausgabe der Antwortgrößen erfolgt in der Regel sehr viel schneller, etwa in 2 bis 5 ms, als eine Berechnung solcher optimierter Bewegungsdaten mit Hilfe klassischer Berechnungs-Algorithmen (z.B. Optimierungsverfahren).

Gemäß **Schritt D)** werden die nun vorliegenden Abschnitts-Bewegungsdaten jedoch erst zu einem geringfügig späteren Zeitpunkt, nämlich wenn ein bestimmtes Startkriterium für das Abarbeiten dieses Bewegungs-Abschnittes gegeben ist - etwa der Sauger des entsprechenden Roboters den entsprechenden Startpunkt dieses Bewegungs-Abschnittes erreicht hat - benötigt, weshalb sie bis dahin in einem Daten-Puffer abgelegt und vorgehalten werden.

Erst bei Erreichen des Start-Kriteriums (z.B. verstrichene Zeitdauer oder Erreichen der Startposition) zum Durchführen dieses Bewegungs-Abschnittes werden gemäß **Schritt E)** die entsprechenden Abschnitts-Bewegungsdaten, die vorzugsweise bereits konkrete Steuerkommandos zum Ansteuern der einzelnen Antriebe des Roboters enthalten, aus dem Daten-Puffer ausgelesen und der Bewegungs-Abschnitt vollzogen unter Benutzung der Abschnitts-Bewegungsdaten, insbesondere der Steuerkommandos, durch die Roboter-Steuerung oder Anwendungs-Steuerung.

Der Vorteil besteht also darin, dass nach Vorliegen eines Arbeits-Auftrages für einen Roboter die dafür notwendigen Bewegungs-Daten so schnell vorliegen, dass dadurch keine Verzögerung beim Abarbeiten der Arbeits-Aufträge eintritt bzw. diese Verzögerung keinen wesentlichen Einfluss auf den eigentlichen Verarbeitungsprozess hat.

Ein weiterer Vorteil ist, dass der Vorberechnungs-Prozess außerhalb der Anwendungs-Umgebung und ohne Verbindung damit durchgeführt werden kann, also auf separaten Rechnern und abseits der Anwendungs-Umgebung und vor allem entkoppelt insbesondere zeitlich lange vor, der Durchführung des Arbeits-Auftrages in der realen Anwendungs-Umgebung.

Meist wird der Vorberechnungs-Prozess und das Trainieren der KI einmalig vor der ersten Inbetriebnahme der Anwendungs-Umgebung, etwa einer Verpackungs-Maschine, durchgeführt, sobald alle Parameter aus der Anwendungs-Umgebung, mindestens die Parameter der Roboter, bekannt sind.

Dementsprechend muss dies meist nur dann wiederholt werden, wenn etwa ein Werkzeug gegen eine andere Art von Werkzeug in der Anwendungs-Umgebung getauscht wird, oder ein Roboter gegen einen anderen Roboter, auf jeden Fall dann, wenn der Roboter gegen einen Roboter einer anderen Art oder Größe getauscht wird. Aber selbst wenn es sich um einen eigentlich baugleichen Roboter handelt, können die individuellen Unterschiede zweier zwei baugleichen Robotern groß genug sein, um eine neue Durchführung des Vorberechnungs-Prozesses sinnvoll erscheinen zu lassen.

Der Vorteil des Vorberechnungs-Prozesses liegt darin, dass trotz hoher Rechenleistung und relativ langer Rechenzeit aus den Trainings-Auftrags-Daten, insbesondere deterministisch, exakte Trainings-Bewegungsdaten für einen Arbeits-Auftrag oder Bewegungs-Abschnitt - ein Auftrag kann mehrere Bewegungs-Abschnitte umfassen - berechnet werden können.

Dennoch könnte es sinnvoll sein, selbst diese beispielhaften Trainings-Datensätze, die nur als Trainings-Daten für eine KI gedacht sind, selbst mittels einer leistungsfähigen KI zu erstellen.

Die Bewegungs-Daten wären dann aufgrund der verwendeten KI nicht mehr so exakt, dafür könnte eine sehr viel größere Anzahl von Trainings-Daten in kurzer Zeit erstellt werden, abhängig aber sehr stark von z.B. Trainingsgrad und/oder Datenqualität für das Training der dafür benutzten KI und vor allem deren Genauigkeit.

Ferner können die im **Schritt A** ermittelten Trainings-Bewegungs-Abschnitte und/oder die zugehörigen Trainings-Abschnitts-Bewegungsdaten ich aufgrund von Erfahrungen, wie sie insbesondere in der Anwendung-Umgebung bei Durchführung des Schrittes E gemacht werden - etwa in Form von dabei ermittelten physikalischen Parametern der Anwendungs-Umgebung - im **Schritt A** verändert, insbesondere optimiert, werden.

Dies kann eventuell während der Durchführung des Schrittes E erfolgen, beispielsweise durch den Steuer-Computer der Anwendungsumgebung, in der Regel wird es jedoch durch einen Vorberechnungs-Rechner erfolgen, der **Schritt A** durchführt.

Diese geänderten Trainings-Abschnitts-Bewegungsdaten ABD können gemäß **Schritt B** zum weiteren Trainieren der KI verwendet werden, was insbesondere während der weiteren Durchführung des Arbeitsauftrages erfolgen kann.

Von da an wird die weiter trainierte KI im **Schritt C** in der Anwendungsumgebung genutzt.

Da die einzelnen Antriebe in einem Roboter konkrete Steuer-Kommandos benötigen, sollten die Bewegungsdaten bereits solche konkreten Steuer-Kommandos enthalten.

Die Bewegungs-Daten können bereits Steuer-Kommandos enthalten oder diese werden entweder bereits im **Schritt C)** mit erzeugt, oder auch erst in einem nachfolgend beschriebenen **Schritt N),** also spätestens vor Ablegen der Bewegungs-daten im Daten-Puffer oder auch erst danach durch den Steuerungscomputer der Anwendungs-Umgebung, insbesondere des Roboters oder der Verpackungsmaschine, insbesondere der Roboter-Straße.

Da die auf die Anfragegrößen hin von der KI in der Anwendungs-Umgebung erhaltenen Antwortgrößen keine exakt errechneten Antwortgrößen sind, sondern von der KI beispielweise auch mittels Interpolation und Extrapolation ermittelt werden, sind die Antwortgrößen weniger exakt als die vorab errechneten Trainings-Bewegungsdaten, können also in der Praxis der Anwendungs-Umgebung so nicht optimal durchführbare oder überhaupt nicht durchführbare Bewegungs-Daten enthalten.

Je nachdem, wie groß die Abweichungen vom durchführbaren Bereich sind, kann zwischen **Schritt C) und D)** ein Nachbearbeitungs-**Schritt N** sinnvoll sein:
Dort werden die möglicherweise noch nicht ausreichend exakten Antwortgrößen nachbearbeitet und in exaktere, durchführbare Abschnitts-Bewegungsdaten umgeformt, und/oder vorzugsweise auch bereits direkt die Steuer-Kommandos für die Antriebe in den Robotern erzeugt.

Eine solche Nachbearbeitung kann beispielsweise unter Berücksichtigung von bestehenden Inkonsistenzen / Diskrepanzen zwischen den Antwortgrößen der KI einerseits und den realen Gegebenheiten in der Anwendungs-Umgebung - etwa Grenzwerte, die durch den mechanischen und elektrischen Aufbau des Roboters oder der gesamten Maschine der Anwendungsumgebung gegeben sind - oder des zu erfüllenden Arbeit-Auftrages oder des Zustandes des Roboters oder der Anwendungs-Umgebung andererseits bestehen.

Beim Überbrücken der Inkonsistenzen / Diskrepanzen kann es sein, dass die Gegebenheiten in der Anwendungs-Umgebung nicht geändert werden können und dann die Antwortgrößen daraufhin angepasst werden müssen, oder es könnten sowohl die Antwortgrößen als auch die Gegebenheiten in der Anwendungs-Umgebung geändert werden, letzteres indem beispielsweise das Systemverhalten der Anwendung-Umgebung günstig beeinflusst werden soll.

In letzterem Fall ist eine Priorisierung oder Gewichtung zwischen beiden notwendig, um festzulegen, in welchem Sinn die Nachbearbeitung erfolgen soll.

Die Durchführung der einzelnen **Schritte A) bis E)** kann weiter verbessert werden durch folgende optionalen Maßnahmen:

### Zu Schritt A):

Für die Ermittlung optimaler Bewegungsdaten muss natürlich mindestens ein Optimierungs-Parameter vorgegeben sein, was meist die Bewegungs-Zeit ist, die zum Absolvieren des Bewegungs-Abschnittes von dessen Startpunkt bis zu dessen Zielpunkt benötigt wird, und die so gering wie möglich sein soll.

Andere, besondere weitere, Optimierungs-Parameter könnten das Minimieren der Belastungen von Antriebsmotoren, Lagerungen, Führungen oder anderer Teile der Anwendungs-Umgebung sein.

Wenn mehrere Optimierungs-Parameter gleichzeitig vorgegeben werden, muss eine Gewichtung zwischen den Optimierungs-Parametern zusätzlich mit vorgegeben werden und/oder eine Priorisierung, insbesondere eine Priorisierung-Reihenfolge, unter den mehreren Optimierungs-Parametern.

In letzterem Fall wird zunächst nach den Optimierungs-Parametern mit der ersten Priorität optimiert, und wenn sich dann hinsichtlich der anderen Optimierungs-Parameter unterschiedliche Möglichkeiten ergeben, die die anderen Optimierungs-Parameter unterschiedlich verändern, wird beim Optimieren in dieser Reihenfolge nach dem Parameter mit der zweiten Priorisierung und danach nach dem Parameter mit der dritten Priorisierung usw. entschieden.

Eine weitere Möglichkeit besteht in der gleichzeitigen Verfolgung einer Summe von priorisierten Teilsummenkriterien.

Eine Gewichtung kann unterschiedlich dargestellt werden, beispielsweise indem mindestens ein bestimmter relativer Wert, also Prozentsatz, oder absoluter Wert eines ersten Optimierungs-Parameters von dessen maximal erreichbaren Wert in der vorliegenden Situation erreicht werden soll, eine weitere Steigerung jedoch zugunsten der Optimierung des nächst niedriger gewichteten Parameters erfolgen soll.

Für die Ermittlung der Abschnitts-Bewegungs-Daten sind mindestens die Start-Parameter in Form von Start-Position und ggfs. Start-Drehlage - falls beispielsweise die Produkte in der Aufsicht betrachtet unrund sind, die Drehlage um eine Hochachse - sowie die Ziel-Parameter in Form der Zielposition und ggfs. der Ziel- Drehlage des Werkzeuges, meist Saugers vorgegeben.

Position und Drehlage ergeben zusammen die Raumlage eines Bauteils oder Produktes, auch Pose genannt.

Um besser optimieren zu können, werden vorzugsweise zusätzlich Begleit-Parameter zur Verfügung gestellt, welche die Begleit-Umstände des Arbeit-Auftrages beschreiben, beispielsweise die Ankunfts-Geschwindigkeit, mit der das Werkzeug aufgrund der Bewegungs-Daten des vorhergehenden Bewegungs-Abschnittes an der Startposition - also der Ziel-Position des vorhergehenden Bewegungs-Abschnittes - ankommen wird und/oder aus welcher Ankunfts-Richtung. Ebenso ist die Abfahrts-Geschwindigkeit und/oder Abfahrts-Richtung des Werkzeuges von der Zielposition des Bewegungs-Abschnittes von Interesse, insbesondere für ein möglichst schnelles Durchlaufen des Werkzeuges über mehrere Bewegungs-Abschnitte.

Die Begleit-Parameter können auch Umgebungs-Eigenschaften um das Werkzeug herum, ggfs. auch des Werkzeuges selbst, sein, die für das Optimieren der Bewegungs-Daten ebenfalls zur Verfügung gestellt werden sollten, beispielsweise die Elastizität der Antriebe des Roboters, Systemparameter und/oder Systemzustände oder daraus abgeleitete Größen der Anwendungs-Umgebung, insbesondere dessen Schwingungsverhalten und/oder Dämpfungsverhalten und/oder Temperatur-Dehnungsverhalten.

Wenn die, insbesondere statische, Belastung für bestimmte Bauteile, etwa für Lagerstellen oder Linearführungen, als eines der Optimierungs-Parameter optimiert werden soll, sollten hierfür Belastungs-Grenzwerte für diese Bauteile und Stellen vorgegeben werden.

Wenn die dynamische Belastung, insbesondere in Form von Schwingungen, für den Roboter und/oder die Anwendungs-Umgebung, also die Anlage oder Maschine, optimal geringgehalten werden soll, sollte das Schwingungsverhalten des entsprechenden Teils, insbesondere des Roboters oder der gesamten Anlage, bekannt sein.

Hierfür kann sowohl für die insbesondere statische Belastung als auch das Schwingungsverhalten ein entsprechendes Modell für die Anwendungs-Umgebung entweder für den Vorberechnungs-Prozess zur Verfügung gestellt, also hinterlegt werden oder im Vorberechnungs-Prozess erst selbst für die Anwendungs-Umgebung oder dessen Teile erstellt werden auf Basis vorgegebener, insbesondere konstruktiver, Daten der Anwendungs-Umgebung, was natürlich den Rechenaufwand für die Erstellung beispielhafter Trainings-Bewegungs-Daten weiter erhöht.

Ferner können die im **Schritt A** für die Ermittlung der Trainings-Abschnitts-Bewegungsdaten verwendeten Begleit-Parameter aufgrund von Erfahrungen, die insbesondere in der Anwendung-Umgebung bei Durchführung des Schrittes E gemacht wurden, verändert, insbesondere optimiert, werden,

Die Erfahrungen können in Form von während des Schrittes E ermittelten physikalischen Parametern vorliegen.

Dann können gemäß **Schritt B** mittels der geänderten Begleit-Parameter neu ermittelte, geänderten Trainings-Abschnitts-Bewegungsdaten zum weiteren Trainieren der KI verwendet werden, insbesondere während der weiteren Durchführung des Arbeitsauftrages erfolgen kann.

Von da an wird im **Schritt C** die weiter trainierte KI in der Anwendungsumgebung genutzt.

### Zu Schritt B):

Um zu entscheiden, wann die KI als ausreichend gut trainiert angesehen und das Training beendet wird, kann ein Toleranz-Bereich um die für die aus den Trainings-Daten erzeugten Trainings-Abschnitts-Bewegungsdaten vorgegeben werden, die im Schritt A) beispielsweise aus den Trainings-Auftrags-Daten errechnet wurden.

Die KI kann dann als ausreichend trainiert betrachtet werden, wenn bei Eingabe von Trainings-Auftrags-Daten aus den Trainings-Daten des Schrittes A) die KI selbst - ohne auf diese Trainings-Daten zurückzugreifen, sondern mittels ihrer eigenen künstlichen Intelligenz - als Antwortgrößen Abschnitts-Bewegungsdaten liefert, die in diesem Toleranz-Bereich liegen.

### Zu Schritt C):

Die KI kann so ausgebildet werden, dass sie als Antwortgrößen nicht nur Bewegungs-Daten in Form eines einzigen Wertes liefern kann, sondern auch BereichsAngaben, die also eine gewisse Unschärfe der Antwortgröße darstellen.

### Zu Schritt D):

Vorzugsweise werden die in der Anwendungs-Umgebung ermittelten Abschnitts-Bewegungsdaten in einem Daten Puffer abgelegt, der einen zeitlichen oder örtlichen Bezug haben kann

Vorzugsweise werden die in der Anwendungs-Umgebung ermittelten Abschnitts-Bewegungsdaten mit einem zeitlichen und/oder örtlichen Vorlauf im Daten-Puffer abgelegt. Der Mindestwert dieses zeitlichen und/oder örtlichen Vorlaufes kann vorgegeben werden, gegebenenfalls ebenfalls ein Höchstwert hierfür.

Ein zeitlicher Vorlauf sollte so bemessen sein, dass die Zeit für die Berechnung der Abschnitts-Bewegungsdaten des Folge-Bewegungsabschnitts kleiner ist als die Zeit bis zum Ende des aktiven Bewegungsabschnitts.

Üblicherweise liegen Berechnungszeiten zwischen 2-50ms.

Der Daten Puffer kann ein oder mehrere Bewegungsabschnitte verwalten.

Der Daten Puffer sollte so gefüllt werden, dass vor Erreichen des Endes eines aktiv in Abarbeitung befindlichen Bewegungsabschnitts die Abschnitts-Bewegungsdaten des nachfolgenden Bewegungsabschnitts im Puffer vorliegen.

Dadurch wird sichergestellt, dass zu jedem Zeitpunkt und für jeden der Roboter bei Erreichen des Zielpunktes eines seiner Bewegungs-Abschnitte die Bewegungs-Daten für den nächsten Bewegungs-Abschnitt nicht nur vorhanden sind, sondern auch rechtzeitig aus den Daten-Speicher ausgelesen und der Anlagen-Steuerung zur Verfügung gestellt werden können.

Liegen die Folgedaten nicht vor und der aktiv in Abarbeitung befindliche Bewegungsabschnitt endet nicht im Stillstand, so kann entweder ein Verzögern auf diesem Bewegungsabschnitt eingeleitet werden oder es wird beim Erkennen dieser fehlenden der folgenden Abschnitts-Bewegungsdaten im Daten-Puffer eine Brems-Sequenz, insbesondere eine Stopp-Sequenz automatisch berechnet, in der festgelegt ist, wie schnell und ggfs. mit welcher Richtung gegen Endes des Bewegungs-Abschnittes das Werkzeug, insbesondere bis zum Stillstand , in der Ziel-Position abgebremst wird.

Durch die Brems-Sequenz oder Stopp-Sequenz kann sich das Werkzeug über die vorgegebene letzte Position des aktiven Bewegungsabschnitts hinaus bewegen.

### Zu Schritt E):

Wenn am Ende des in Durchführung befindlichen Bewegung-Abschnittes keine Abschnitts-Bewegungsdaten für den unmittelbar nachfolgenden Bewegung-Abschnitt vorhanden sind, wird vorzugsweise der Roboter sprechend der enthaltenen Stopp-Sequenz am Ende des Bewegung-Abschnittes angehalten, um keine Kollisionen zu verursachen.

### Allgemein:

Um die Ermittlung vor allem der Trainings-Trainings-Bewegungs-Daten im **Schritt A)** und/oder der im **Schritt D)** erzeugten realen Bewegungs-Daten für einen realen Arbeits-Auftrag zu erleichtern, können für jeden Roboter abhängig von dessen Aufgabe in der entsprechenden Anwendungs-Umgebung ein oder mehrere Bewegungs-Grundtypen festgelegt werden, wobei die festgelegten Bewegungs-Abschnitte, also deren Abschnitts-Bewegungs-Daten vorzugsweise aller Bewegungs-Abschnitte, unter diesen oder einen dieser Bewegungs-Grundtypen subsummierbar sein sollen, sei es im **Schritt A)** und/oder im **Schritt D).**

Dies reduziert den Rechenaufwand im entsprechenden Schritt, also im **Schritt A)** für das Festlegen der beispielhaften Bewegungs-Daten und im **Schritt D)** für das Festlegen der echten Bewegungs-Daten für einen Bewegungs-Abschnitt eines Arbeits-Auftrages.

Ferner spielt für das Festlegen von Bewegungs-Daten des Roboters die Geschwindigkeit und/oder Beschleunigung und/oder Richtung der Bewegung der Aufnahmefläche und/oder Ablagefläche - bei einer Roboter-Straße zum Umsetzen von Produkten, meist des Produkt-Bandes und/oder des Behälter-Bandes - eine wesentliche Rolle, da diese für ein Zugreifen des Roboters auf ein Produkt an der richtigen Aufnahmestelle und/oder ein Ablegen des Produktes an der richtigen Ablagestelle essentiell ist.

Erfindungsgemäß ist diese Transportgeschwindigkeit nicht auf eine bestimmte Raumrichtung beschränkt.

Diese Transport-Geschwindigkeit und/oder - Beschleunigung - bei dem angesprochenen Beispiel von immer in die gleiche Richtung laufenden Bändern wie einem Behälter-Band oder einem Produkt-Band ist die Richtung bekannt und ändert sich nicht - kann an unterschiedlichen Stellen und Schritten des Prozesses berücksichtigt werden:
a) Entweder wird die Transportgeschwindigkeit und/oder - Beschleunigung bereits bei der Ermittlung der Bewegungs-Daten im **Schritt A)** als Umgebungs-Parameter mit vorgegeben.

Oder diese Trainings-Bewegungs-Daten, mit denen die KI trainiert wird, berücksichtigt die Transportgeschwindigkeiten und/oder - Beschleunigungen nicht und dann ist die Transportgeschwindigkeit auch nicht in den Antwortgrößen der KI für einen realen Arbeits-Auftrag mit enthalten.

Dann muss spätestens bei der Ermittlung der Steuer-Kommandos für die Antriebe, also spätestens im **Schritt E),** aus den Antwortgrößen der KI, die Transportgeschwindigkeit und/oder - Beschleunigung mitberücksichtigt werden.

Falls dazwischen eine Nachberechnung gemäß **Schritt D)** stattfindet, kann dies auch in diesem Schritt erfolgen.

In einer bevorzugten Variante erfolgt beides:
Zunächst wird gemäß a) die - zu diesem Zeitpunkt nur vermutbare, beispielsweise hochgerechnete - Transportgeschwindigkeit/Beschleunigung bereits für die Ermittlung der Beispiel-Bewegungs-Daten berücksichtigt und ist dann auch bereits in den Antwortgrößen der KI in der realen Anwendungs-Umgebung enthalten.

Zusätzlich kann in der realen Anwendungs-Umgebung, die bisher nur vermutete Transportgeschwindigkeit und/oder -Beschleunigung mit der bis dahin bekannten oder nun besser vermutbaren Transportgeschwindigkeit und/oder -Beschleunigung eines Bandes oder Förderers verglichen werden und bei einer Differenz, die über eine Toleranzgrenze liegt, die aufgrund der ursprünglich vermuteten Transportgeschwindigkeit und/oder -Beschleunigung erstellten Bewegungs-Daten, insbesondere Steuer-Kommandos, unter Berücksichtigung dieser Differenz nachberechnet werden.

Ein Roboter-Anwendungssystems umfasst einerseits eine Anwendungs-Umgebung wie etwa eine Verpackungs-Maschine mit wenigstens einem Roboter und andererseits eine Anwendungs-Steuerung zum Steuern der relativ zueinander beweglichen Teile der Anwendungs-Umgebung, insbesondere der Antriebe der beweglich miteinander verbundenen Teile, insbesondere des wenigstens einen Roboters.

Erfindungsgemäß wird die bestehende Aufgabe für ein solches Roboter-Anwendungssystem dadurch gelöst, dass das Roboter-Anwendungs-System einen Vorberechnungs-Rechner umfasst, der in der Lage ist, aus beispielhaften Trainings-Auftrags-Daten hierfür jeweils wenigstens einen Bewegungs-Abschnitt des Roboters festzulegen und dafür optimierte Trainings-Abschnitt-Bewegungsdaten zu ermitteln, also etwa zu errechnen.

Ein solches Roboter-Anwendungssystem umfasst auch eine künstliche Intelligenz (KI), insbesondere ein mit Machine-Learning-Verfahren trainierbares Machine-Learning-Modell (MLM), insbesondere mit wenigstens einem künstlichen neuronalen Netz (KNN) und insbesondere einer Trainings-Einheit, welche in der Lage ist, mit Hilfe der beispielhaften Bewegungs-Abschnitts-Daten für die beispielhaften Bewegungs-Abschnitte der Beispiel-Aufträge die KI zu trainieren.

Erfindungsgemäß umfasst dabei die Anwendungs-Steuerung vorzugsweise
- ein Arbeitsauftrags-Generator-Modul (Beispiel-Generator-Modul), welches in der Lage ist, z.B. aufgrund von Eingaben des Benutzers oder zufallsbedingt, beispielhafte Trainings-Arbeits-Aufträge für jeden einzelnen Roboter zu erstellen und als Anfragegröße in die zu trainierende KI einzugeben
   und/oder
- einen Real-Arbeitsauftrags-Generator-Modul (Real-Generator-Modul) - welches gleich aufgebaut sein kann wie das Beispiel-Generator-Modul im Vorberechnungs-Rechner, also ein baugleiches Generator-Modul sein kann - das basierend auf Eingaben des Nutzers, etwa dem Einschalten des Roboter-Anwendungs-Systems 100 mit dort hinterlegten Arbeits-Aufträgen AA, einen realen Arbeitsauftrag und dessen Bewegungs-Abschnitte BA erzeugt und als Anfragegrößen in die trainierte KI eingibt.
   und/oder
- ein Bewegungs-Daten-Modul (Daten-Modul), welches in der Lage ist, Antwortgrößen der KI entgegenzunehmen und daraus Bewegungs-Daten zu erzeugen, insbesondere mit oder in Form von Steuerkommandos für die Antriebe des Roboters
   und/oder
- ein 1. Nachbearbeitungs-Modul (1. Nach-Modul), um die vom Bewegungs-Daten-Modul erzeugten Bewegungs-Daten gegebenenfalls nachzubearbeiten, beispielsweise um Inkonsistenzen mit der realen Anwendungs-Umgebung, insbesondere im betreffenden Bewegungs-Abschnitt, zu beseitigen,
   und/oder
- ein Puffer-Referenzwert-Generator-Modul (Ref-Modul), welches in der Lage ist die Abschnitts-Bewegungsdaten so zu manipulieren, dass beispielsweise ein Abbremsen und Beschleunigen innerhalb der vorberechneten Bewegungsabschnitte oder über mehrere Bewegungsabschnitte hinaus ermöglicht wird. Die Manipulation kann hierbei wieder verschiedene Zielkriterien berücksichtigen, der Referenzwert-Generator selbst kann wiederum aus einer trainierten KI bestehen, die als Eingang die vorberechneten Bewegungsabschnitte und ggf. detailliertere Größen der Anwendungsumgebung berücksichtigt
   und/oder
- ein Stopp-Sequenz-Generator-Modul (Stopp-Modul), welches in der Lage ist, eine Stopp-Sequenz für einen Bewegungs-Abschnitts-Datensatz zu erzeugen
   und/oder
- ein Puffer- Management-Modul (Manage-Modul), welches in der Lage ist, das Einbringen, Abspeichern und gegebenenfalls Sortieren und Ausbringen von Abschnitts-Bewegungs-Daten, insbesondere Datensätzen, im Puffer zu organisieren
   und/oder
- ein Puffer-Auslese-Modul (Auslese-Modul), welches in der Lage ist, das Auslesen von Abschnitts-Bewegungsdaten, insbesondere Datensätzen, aus dem Puffer durchzuführen und ggf. zu manipulieren
   und/oder
- ein Förderband-Steuerungs-Modul (F-Steuer-Modul), welches die entsprechenden Förderer für Produkte und/oder Behälter, seiner Förderbänder oder andere Bauformen von Förderer, steuert
   und/oder
- Fördergeschwindigkeits/-Beschleunigungs-Abschätz-Modul (F-Abschätz-Modul), welches in der Lage ist, die Geschwindigkeit/Beschleunigung des Förderers zu definierten Zeitpunkten oder Funktionszuständen der Anwendungs-Umgebung in der Zukunft abzuschätzen
   und/oder
- ein 2. Nachbearbeitungs-Modul (2. Nach-Modul), um die aus dem Daten-Puffer ausgegebenen oder aus gelesenen Bewegungs-Daten nach zu bearbeiten, insbesondere im Fall einer Differenz zwischen den bei der Erstellung dieser Bewegungs-Daten unterstellten Geschwindigkeit und einer aktuell gemessenen oder nun besser abschätzbaren Fördergeschwindigkeit/Beschleunigungen.

Damit sind als Vorteile erzielbar
- exakt berechnete optimale Bewegungswege als Trainingsdaten für KI
- geringerer Rechenaufwand und Datenmenge in der Anwendungs-Umgebung
- schnelle Ermittlung der realen Bewegungsdaten für die einzelnen Arbeitsaufträge.

### Definitionen der in der vorliegenden Anmeldung verwendeten Begriffe:

Arbeits-Auftrag bedeutet:
Beschreibung einer Bewegung und/oder Tätigkeit für einen Roboter
Auftrags-Daten bedeutet: Datensatz, der diese Beschreibung in Form von digitalen Daten wiedergibt

Optimierungs-Parameter bedeutet:
der an einem Arbeitsauftrag zu optimierende Parameter, beispielsweise die Zeit, die zur Durchführung des Arbeits-Auftrages benötigt wird

Begleit-Parameter bedeutet:
Parameter, die die Begleit-Umstände des Arbeitsauftrages beschreiben und den Arbeitsauftrag selbst beeinflussen

Umgebungs-Parameter bedeutet:
Parameter, die die Umgebung, insbesondere Eigenschaften der Umgebung, in der der Arbeitsauftrag durchgeführt wird, beschreiben, beispielsweise die Belastbarkeit oder das Schwingungsverhalten von an dem Arbeitsauftrag beteiligten Teilen, sei es des Roboters oder der Anwendungs-Umgebung

Bewegung bedeutet:
(vorgesehene) Bewegung eines Roboters, insbesondere dessen Werkzeuges in allen Raumrichtungen und Drehung um alle Raumrichtungen

Bewegungs-Daten bedeutet:
Datensatz, der diese Beschreibung in Form von digitalen Daten wiedergibt

Steuerkommando bedeutet:
konkrete an Steuer-Befehle für die einzelnen Antriebe in einem Roboter

Roh-Bewegungs-Daten bedeutet:
Bewegungsdaten die in dieser Form noch nicht zum Festlegen exakter Steuer-kommandos für die Roboter-Antriebe geeignet sind

Bewegungs-Abschnitt bedeutet:
Teil einer Gesamtbewegung, beispielsweise Teil eines Arbeitszyklus eines Roboters, der für einen bestimmten Arbeitsschritt - hier auch Arbeit-Auftrag genannt - in der Anwendungsumgebung nötig ist

Abschnitt-Bewegungsdaten bedeutet:
Datensatz, der diese Bewegung in Form von digitalen Daten wiedergibt

Start-Kriterium für Bewegungs-Abschnitt bedeutet:
ein meist zeitlich oder örtlich vorgegebenes Kriterium, ab dem ein Bewegung-Abschnitt vollzogen werden soll
künstliche Intelligenz (Kl), bedeutet:
   ein mit Machine-Learning-Verfahren trainierbares Machine-Learning-Modell (MLM)

Machine-Learning bedeutet:
Automatisierte Trainingsmethode für eine künstliche Intelligenz, insbesondere dessen künstliches neuronales Netz, mittels Trainingsdaten

Inkonsistenz bedeutet:
Widerspruch zwischen der Situation in der Anwendungs-Umgebung zum Ausführungszeitpunkt einer beabsichtigten Bewegung oder eines Bewegung-Abschnitte des und den von der KI hierfür gelieferten Antwortgrößen

Priorisierung bedeutet:
Reihenfolge, in der bestimmte Parameter benutzt werden, insbesondere optimiert werden

Gewichtung bedeutet:
Verhältnis, in dem verschiedene vorhandene Optimierungsparameter relativ zueinander einer Optimierung unterzogen werden sollen

Position bedeutet:
die Stelle, an der sich ein Gegenstand, etwa ein Produkt oder ein Werkzeug, im Raum befindet

Drehlage bedeutet:
die Drehlage, an der sich ein Gegenstand, etwa ein Produkt oder ein Werkzeug, im Raum befindet, insbesondere relativ zu festgelegten Raumachsen

Raumlage bedeutet:
Summe aus Position und Raumlage

Ankunfts-Richtung bedeutet:
diejenige Richtung, aus der sich ein Werkzeug dem Startpunkt für eine vorgesehene Bewegung des Werkzeuges, also einem Bewegungs-Abschnitt, voraussichtlich nähern wird, falls die vorgesehene Bewegung keine andere Ankunfts-Richtung benötigt

Ankunfts-Geschwindigkeit bedeutet:
diejenige Geschwindigkeit, mit der sich ein Werkzeug dem Startpunkt für eine vorgesehene Bewegung des Werkzeuges, also einem Bewegungs-Abschnitt, voraussichtlich nähern wird, falls die anschließende Bewegung keine andere Geschwindigkeit erfordert

Abfahrts-Richtung bedeutet:
diejenige Richtung, in die sich ein Werkzeug vom Zielpunkt einer vorgesehenen Bewegung des Werkzeuges, also eines Bewegungs-Abschnitts, voraussichtlich entfernen wird, falls die nachfolgende Bewegung keine andere Abfahrts-benötigt

Anfahrts-Geschwindigkeit bedeutet:
diejenige Geschwindigkeit, mit der sich ein Werkzeug vom Zielpunkt einer vorgesehenen Bewegung des Werkzeuges, also einem Bewegungs-Abschnitt, voraussichtlich entfernen wird, falls die anschließende Bewegung keine andere Geschwindigkeit erfordert

Schwingungs-Modell bedeutet:
mathematisches Modell zur Berechnung des Schwingungsverhaltens eines Bauteils

Belastungs-Modell bedeutet:
mathematisches Modell zur Berechnung auftretender Belastungen an einem Bauteil
zeitlicher Vorlauf bedeutet:
   in Zeiteinheiten angegebener Vorlauf, etwa des Beginns eines vorgesehenen Bewegungs-Abschnittes vom momentanen Zeitpunkt aus
   örtlicher Vorlauf bedeutet:
      in Längeneinheiten angegebener Vorlauf, etwa des Beginns eines vorgesehenen Bewegungs-Abschnittes vom momentanen Standpunkt des betreffenden Bauteils, beispielsweise des Werkzeuges eines Roboters, aus

Stopp-Sequenz bedeutet:
Teil-Datensatz der das Abbremsen eines Bauteils, insbesondere des Werkzeuges des Roboters bis zum Stillstand beschreibt von der Geschwindigkeit und Richtung, die das Werkzeug normalerweise am Ende dieses Bewegungs-Abschnittes besitzt; die Stopp-Sequenz ist i.d.R. Teil der Abschnitts-Bewegung-Daten

Bewegungs-Grundtyp bedeutet:
eine Bewegung die immer aus den gleichen Bewegungs-Abschnitten in der gleichen Reihenfolge zusammengesetzt ist, insbesondere eine Form von Abschnitts-Bewegungsdaten, die vom Nutzer angewendet werden kann und mit anderen Abschnitts-Bewegungsdaten anderer Bewegungs-Grundtypen kombinierbar ist, um eine Gesamtbewegung zu ermöglichen, beispielsweise gesamte Umsetz-Bewegung mit den Bewegungs-Grundtypen: "Anfahren - Greifen - Anheben - Querverfahren - Absenken- Loslassen"

### c) Ausführungsbeispiele

Ausführungsformen gemäß der Erfindung sind im Folgenden beispielhaft näher beschrieben. Es zeigen:
- **Figur 1a:**: ein Anwendungs-System mit Robotern in der Aufsicht,
- **Figur 1b:**: das Anwendungs-System der Figur 1a in Transport-Richtung des Produkt-Bandes,
- **Figur 2a-d:**: Prinzip-Darstellungen von Bewegungs-Abschnitten und zugehörigen Bewegungs-Abschnitts-Datensätzen
- **Figur 3:**: ein Ablaufschema für den Vorberechnungs-Prozess,
- **Figur 4:**: ein Ablaufschema für reale Arbeits-Aufträge,
- **Figur 5:**: ein Ablaufschema für reale Arbeits-Aufträge mit Einbringungs-Stellen der Förder-Geschwindigkeit.

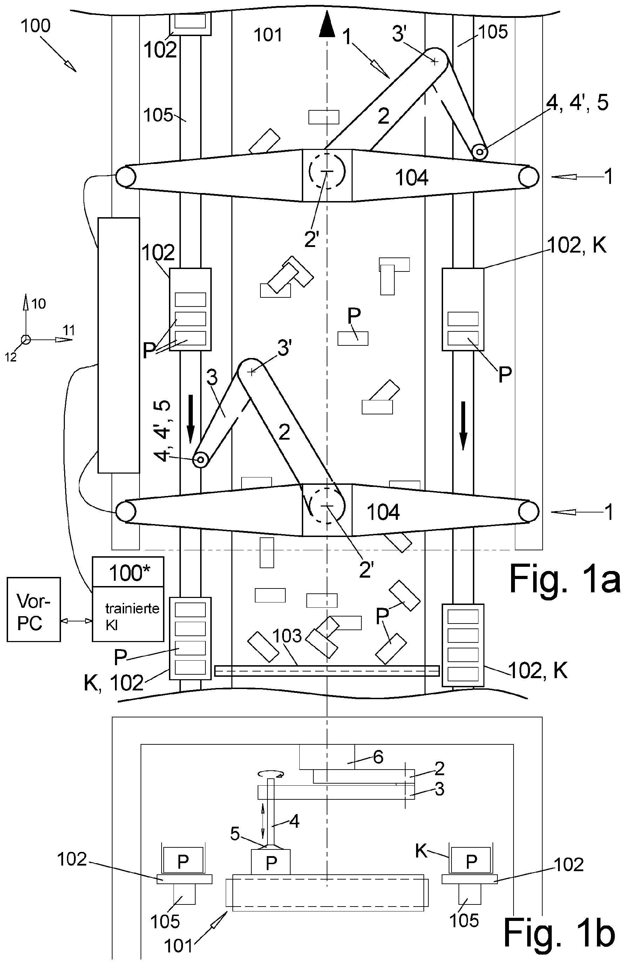

Die **Figuren 1a****,** b zeigen ein Roboter-Anwendungs-System mit einer Roboter-Straße100 als Anwendung-Umgebung 100, bei der entlang des in Transportrichtung X bewegbaren Produkt-Bandes 101 und den parallel dazu zum Beispiel entlang einer Fahrschiene 105 verfahrbaren Schlitten 102, die Umverpackungen wie einen Karton K tragen können, mehrere Roboter 1 in Transportrichtung X hintereinander angeordnet sind.

Die Roboter 1 sollen jeweils ein Produkt P auf dem Behälter-Band 101 Ergreifen, vom Behälter-Band 101 Abheben, zum Nest verfahren und in einem vorgegebenen Nest eines Behälters wie eines Kartons K auf einem Schlitten 102 daneben Ablegen und werden hierfür mit dem erfindungsgemäßen Steuerungsverfahren gesteuert.

Das Roboter-Anwendungs-System umfasst neben dieser Anwendungs-Umgebung 100 in Form einer Roboter-Straße 100 eine Anwendungs-Steuerung 100*, die in diesem Fall sowohl die einzelnen Roboter 1 als auch die anderen beweglichen Teile der Roboter-Straße 100, insbesondere das Behälter-Band 101 und die Schlitten 102, steuert und auch mit dem an einer festen Position, z.B. über, dem Behälter-Band 101 montierten Scanner 103 in datentechnischer Verbindung steht, unter dem die Produkte P auf dem Behälter-Band 101 durchlaufen und welcher deren Position auf dem Behälter-Band 101 noch stromaufwärts des Umsetz-Bereiches - also des Bereiches in Transportrichtung X, in dem die Umsetz-Roboter 1 arbeiten - ermittelt und an die Anwendungs-Steuerung 100* meldet.

Als Roboter 1 sind hier serielle Roboter 1 dargestellt - was für die Durchführung der Erfindung wesentlich ist -, die hängend mittig über dem Behälter-Band 101 an jeweils einer in Querrichtung Y sich quer über dem Behälter-Band 101 erstreckenden Quertraverse 104 mit ihrer Roboter-Basis 6 befestigt sind. Der Oberarm 2 des Roboters 1 ist dabei um eine aufrechte, insbesondere vertikale, Achse 2' gegenüber der Roboter-Basis 6 verschwenkbar und am freien Ende des Oberarmes 2 ist ein Unterarm 3 des Roboters 1 um eine aufrechte, insbesondere vertikale Schwenkachse 3' verschwenkbar befestigt.

Am freien Ende des Unterarmes 3 befindet sich als Roboter-Hand 4 eine gegenüber dem Unterarm 3 in der Höhe verfahrbare Hubsäule 4, an deren unteren freien Ende als Werkzeug 5 ein Sauger 5 dargestellt ist.

Die Hubsäule 4 ist gegenüber dem Unterarm 3 in der Höhe verfahrbar und um eine aufrechte, insbesondere vertikale, Schwenkachse 4' schwenkbar.

Der Roboter 1 ist so dimensioniert, dass er in Querrichtung Y sowohl Positionen auf in seinem Arbeitsbereich befindlichen Schlitten 102 als auch alle Querpositionen auf dem Behälter-Band 101 erreichen kann.

Weiterhin umfasst das Roboter-Anwendungs-System ein Vorberechnungs-Rechner (Vor-PC) zum Vorberechnen optimierter Trainings-Abschnitts-Bewegungsdaten, als Datensätze aus vorgegebenen beispielhaften Trainings-Arbeits-Aufträgen, in diesem Fall Umsetz-Vorgängen oder Bewegungs-Abschnitten BA aus solchen Umsetz-Vorgängen.

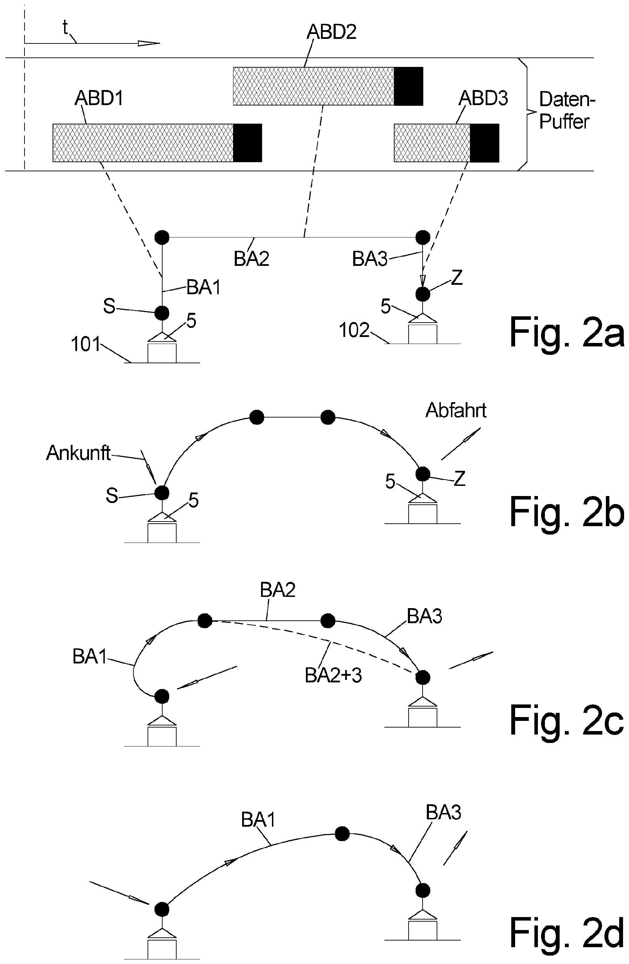

So kann beispielsweise bei den in **Figur 2** dargestellten Umsetz-Vorgängen die Anhebe-Bewegung und/oder die Absetz-Bewegung und/oder die etwa horizontale Verlagerungs-Bewegung als jeweils ein solcher separater Bewegungs-Abschnitt BA1 bis BA3 behandelt werden.

Das Roboter-Anwendungs-System umfasst weiterhin eine künstliche Intelligenz (KI), die mit dem vom Vorberechnungs-Rechner (Vor-PC) ermittelten Trainings-Arbeits-Aufträgen, also Trainings-Bewegungs-Abschnitten und hierfür errechnet den optimierten Trainings-Bewegungs-Daten, trainiert wird für einen Roboter 1 oder alle Roboter 1 des Roboter-Anwendungs-System 100.

Wie in **Figur 1b** dargestellt, muss für einen Umsetz-Vorgang ein Produkt P nach dem Ergreifen auf dem Behälter-Band 101 von diesem abgehoben werden, über das Behälter-Band 101 mit Hilfe des Roboters 1 verlagert und dort durch Absenken in einem von der Anwendung-Steuerung 100* vorbestimmten Nest, etwa in einem Karton K auf einem im Arbeitsbereich dieses Roboters 1 gefahrenen Schlittens 102, abgelegt werden.

Die **Figuren 2a** bis **d** zeigen in vereinfachten Prinzip-Darstellungen eine solche Umsetz-Bewegung in mehreren Varianten des dabei benutzten Bewegungs-Weges, wobei die Umsetz-Bewegung in mehrere Bewegungs-Abschnitte BA, in den **Figuren 2a bis 2c** in je drei Bewegungs-Abschnitte BA1 bis BA3 (Anheben, Verfahren, Absenken) unterteilt ist, wovon der mittlere Bewegungs-Abschnitt BA2 ein etwa horizontaler Bewegungs-Abschnitt ist, der in der Praxis, siehe insbesondere **Figur 1b****,** in der Regel im Vergleich zum Anheben und Absenken deutlich länger ist.

Dabei ist zusätzlich am Startpunkt S und am Zielpunkt Z der gesamten Umsetze-Bewegung die Ankunft des Werkzeuges 5 dargestellt, wobei die Richtung des Pfeiles der Ankunfts-Richtung und die Länge des Pfeiles der Ankunfts-Geschwindigkeit entspricht - und ebenso am Zielpunkt Z der Umsetz-Bewegung die Abfahrt des Saugers 5.

In **Figur 2a** ist davon ausgegangen, dass am Startpunkt S als auch am Zielpunkt Z der Umsetz-Bewegung sich der Sauger 5 jeweils in Ruhe befindet, und Anhebe- sowie Absenk-Bewegung jeweils vertikal verlaufen sowie die Verfahr-Bewegung etwa horizontal verläuft.

Über der **Figur 2a** sind symbolisch die zugehörigen Abschnitts-Bewegungsdaten ABD1 bis ABD3 in ihrem im Datenpuffer abgelegten Zustand in einer solchen zeitlichen Reihenfolge dargestellt, dass der jeweils nachfolgende Datensatz, z.B. ABD2, beginnt zum Zeitpunkt des regulären Endes des vorhergehenden Datensatzes, z.B. ABD1.

An das reguläre Ende jedes Datensatzes ABD1 bis ABD3 ist jeweils eine Stopp-Sequenz angehängt, die ausgeführt wird, wenn kein sich an das Ende des regulären Datensatzes anschließender neuer Datensatz im Datenpuffer vorhanden ist.

Aus **Figur 2a** wird unmittelbar klar, dass es sich dabei nicht um den optimalen Bewegungsweg handelt, allein schon wegen z.B. dem Abbremsen am Ende der Abhebe-Bewegung und dann erst Beschleunigen in horizontaler Richtung für die Verfahr-Bewegung im BA2.

Bei der Bewegung gemäß **Figur 2b** ist dies teilweise behoben, indem die Anhebe-Bewegung in die horizontale Verfahr-Bewegung bogenförmig übergeht, also bereits ab Beginn von BA1 auch eine horizontale Beschleunigung in Richtung Zielpunkt Z stattfindet.

**Figur 2b** zeigt ferner, dass sich am Startpunkt S vorher der Sauger 5 von links oben nähert, also - abhängig von zum Beispiel der Saugkraft des Saugers 5 - die horizontale Bewegungskomponente des ankommenden Saugers 5 am Startpunkt S für das Ergreifen des Produktes P nicht unbedingt auf null reduziert werden muss, wenn der Sauger 5 sich von Startpunkt S aus nach rechts weiterbewegt.

Gleiches gilt am Zielpunkt Z.

**Figur 2c** zeigt eine Situation ähnlich **Figur 2b****,** die sich davon unterscheidet, dass sich der Sauger 5 vor Beginn der Umsatzbewegung deren Startpunkt S von rechts oben her nähert. Um die horizontale Bewegungs-Komponente des Saugers 5 am Startpunkt S nicht vollständig auf null abbremsen zu müssen, verlässt der Sauger 5 den Startpunkt S nach links, also in die vom Zielpunkt Z entgegengesetzte Richtung, was auf den ersten Blick unsinnig erscheinen mag, wegen der beibehaltenen horizontalen Geschwindigkeitskomponente am Startpunkt S jedoch einen Zeitvorteil bringen und eine insgesamt optimierte Umsetz-Bewegung bewirken kann.

**Figur 2d** zeigt eine Bewegung mit Ankunft und Abfahrt ähnlich der **Figur 2b****,** wobei jedoch der Übergang von der Anhebe-Bewegung BA1 in die Absenk-Bewegung BA3 direkt und ohne dazwischenliegenden horizontalen Bewegungs-Abschnitt erfolgt, was gegenüber dem Bewegungsweg gemäß **Figur 2a und 2b** ebenfalls zeitliche Vorteile bringen kann.

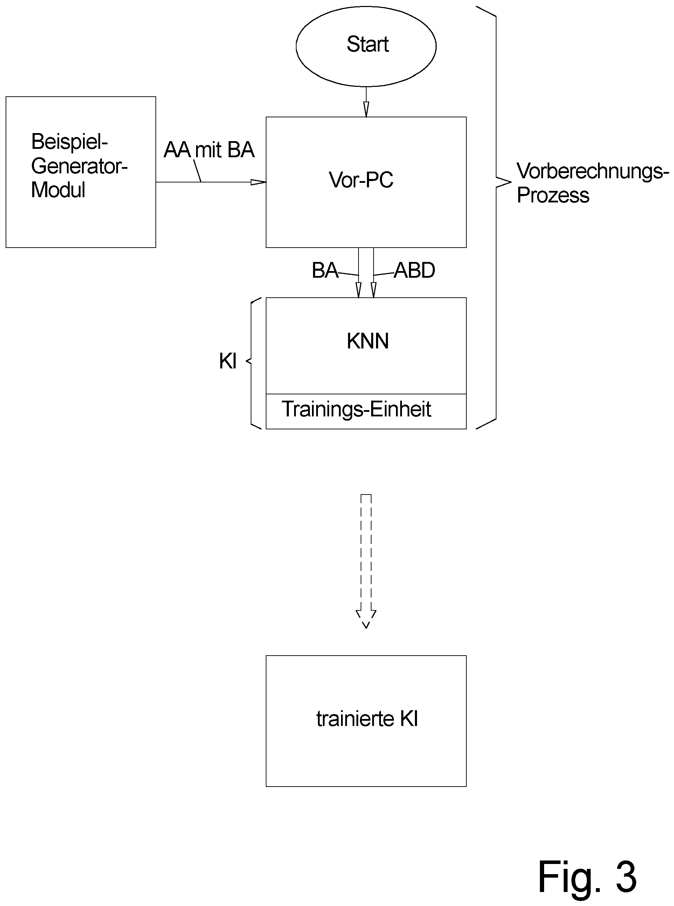

Im Ablaufschema der **Figur 3** ist der Vorberechnungs-Prozess dargestellt, durch den optimierte Trainings-Bewegungs-Daten berechnet werden:
Der Vorberechnungs-Rechner (Vor-PC) benötigt als Eingabegrößen beispielhafte Trainings-Arbeits-Aufträge AA, die u.a. einen zurückzulegenden Bewegungs-Abschnitt BA umfassen, die vorzugsweise von einem Arbeits-Auftrags-Generator-Modul (Beispiel-Generator-Modul) erzeugt werden und dem Vor-PC zur Verfügung gestellt werden.

Dieser ermittelt daraus nach deterministischen Grundsätzen, also in der Regel durch klassische Berechnung mittels konkreter Rechen-Algorithmen, optimierte Abschnitts-Bewegungsdaten ABD für einen solchen Bewegungs-Abschnitt BA.

Sowohl die Beschreibung des Bewegungs-Abschnitts BA, als auch die Abschnitts-Bewegungs-Daten ABD hierzu werden als Trainings-Daten in die künstliche Intelligenz (KI) eingegeben und damit die KI, insbesondere mittels der Trainings-Einheit der KI, trainiert, bis sich die KI in einem fertig trainierten Zustand befindet.

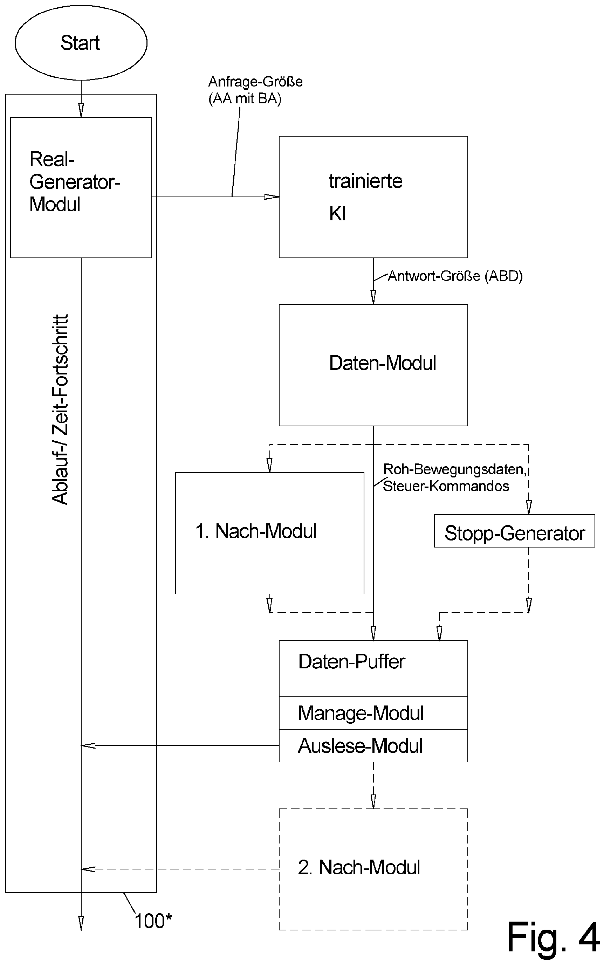

**Figur 4** zeigt ein Ablaufdiagramm in der konkreten Anwendungs-Umgebung 100, in der die trainierte KI dann Teil des Roboter-Anwendungs-Systems ist neben der Roboter-Anwendungs-Umgebung 100.

Nach dem Start der Anwendungs-Steuerung 100* erzeugt deren Real-Arbeits-auftrags-Generator-Modul (Real-Generator-Modul) - welches gleich aufgebaut sein kann wie das Beispiel-Generator-Modul im Vorberechnungs-Prozess, also ein baugleiches Generator-Modul sein kann - basierend auf Eingaben des Nutzers, etwa dem Einschalten des Roboter-Anwendungs-Systems 100 mit dort hinterlegten Arbeits-Aufträgen AA, einen realen Arbeitsauftrag und gibt dessen Bewegungs-Abschnitte BA als Anfragegrößen in die trainierte KI ein.

Diese gibt als Antwortgrößen sehr schnell angebliche optimierte Roh-Abschnitts-Bewegungs-Daten RABD aus, welche in ein Bewegungs-Daten-Modul (Daten-Modul) einfließen, welches in der Lage ist, einerseits diese Antwortgrößen der KI entgegenzunehmen und vor allem daraus die gewünschten Bewegungsdaten , insbesondere Abschnitts-Bewegungsdaten zu erzeugen, insbesondere mit darin enthaltenen oder in Form von Steuer-Kommandos für die Antriebe des Roboters, mit denen der Bewegungs-Abschnitt realisiert werden kann.

Das Daten-Modul kann diese Roh-Abschnitts-Bewegungsdaten RABD an ein Stopp-Sequenz-Generator-Modul (Stopp-Modul) weiterleiten, um daraus eine Stopp-Sequenz für das Ende des Abschnitts-Bewegungs-Datensatzes zu erzeugen.

Vom Daten-Modul können die Roh-Abschnitts-Bewegungs-Daten RABD direkt an einen Daten-Puffer übergeben werden - falls sie qualitativ gut genug sind um direkt als Abschnitts-Bewegungsdaten ABD benutzt zu werden - oder dazwischen ein erstes Nachbearbeitungs-Modul (1. Nach-Modul) durchlaufen, in dem die Bewegungs-Daten aus der KI einer Nachbearbeitung unterzogen werden, insbesondere eine Plausibilitätskontrolle und insbesondere dabei festgestellte Inkonsistenzen gegenüber der Roboter-Anwendungs-Umgebung 100 beseitigt werden oder Ungenauigkeiten ausgeräumt werden, und von dort erst dem Daten-Puffer übergeben werden, in welchem das Puffer-Management-Modul (Manage-Modul) diesen Abschnitts-Bewegungs-Datensatz ABD in der richtigen Reihenfolge ablegt und ggfs. das Sortieren der Datensätze durchführt.

Mittels eines Puffer-Auslese-Moduls (Auslese-Moduls), welches vorzugsweise ebenfalls Bestandteil des Daten-Puffers ist, wird bei Abruf durch die Anwendungs-Steuerung 100* der entsprechende Bewegungs-Datensatz ABD aus den Daten-Puffer ausgelesen und der Anwendungs-Steuerung 100* zur Umsetzung in der Anwendungs-Umgebung 100 übergeben.

Bei der praktischen Anwendung der Abschnitts-Bewegungs-Daten ABD auf eine Anwendungs-Umgebung 100 wie eine Roboter-Straße 100, bei der der Startpunkt S und/oder der Zielpunkt Z eines Bewegungs-Abschnittes BA oder einer größeren Bewegung sich nicht in Ruhe befindet, sondern permanent bewegt, wie etwa das auf einem permanent laufenden, insbesondere konstant laufenden, Behälter-Band 101 liegende und umzusetzende Produkt P in einer Roboter-Straße 100, muss die Transport-Geschwindigkeit dieser z.B. Aufnahmefläche mit berüchtigt werden.

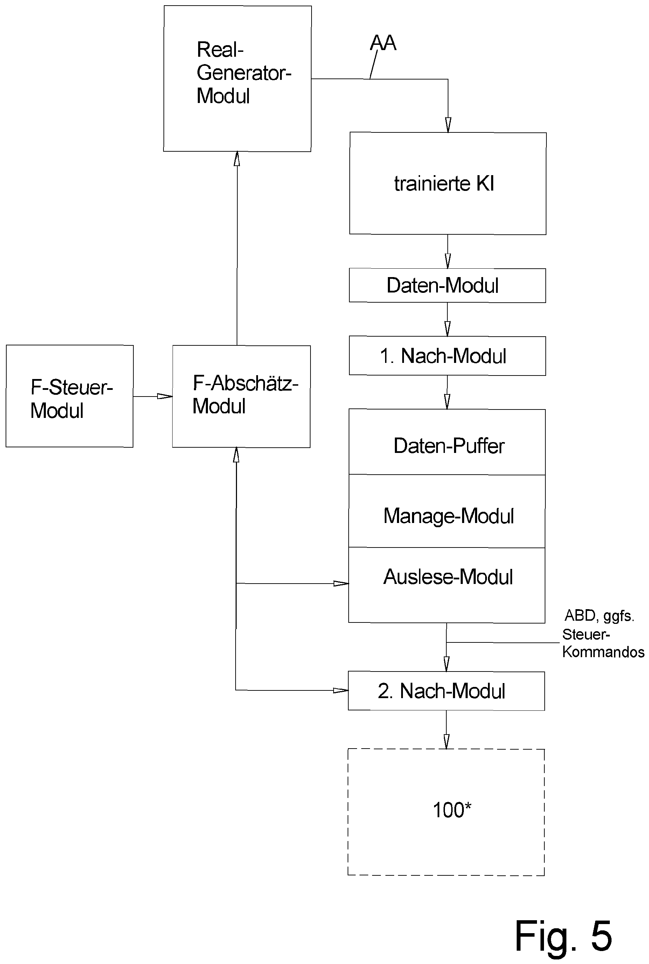

Wie dies erfolgt ist im Ablaufdiagramm gemäß **Figur 5** dargestellt, in dem der rechte Ast des Ablaufschemas gemäß **Figur 4** ergänzt ist:
Das Förderband-Steuer-Modul (F-Steuer-Modul) gibt die bisherige und aktuelle Transport-Geschwindigkeit an ein Förder-Geschwindigkeits-Abschätz-Modul (F-Abschätz-Modul), welches in der Lage ist, die Förder-Geschwindigkeit, also die Transport-Geschwindigkeit, auch für in der Zukunft liegende Zeitpunkte abzuschätzen.

Diese Schätzungen für einen oder mehrere zukünftige Zeitpunkte gibt das F-Abschätz-Modul zum einen weiter an das Real-Generator-Modul, welches die geschätzte Transport-Geschwindigkeit bei der Formulierung seiner Arbeits-Aufträge AA bereits mitberücksichtigen kann.

Das F-Abschätz-Modul gibt seine Schätzung ebenfalls an den Daten-Puffer, insbesondere dessen Manage-Modul und/oder dessen Auslese-Modul, welches die Abschnitts-Bewegungs-Daten ABD, insbesondere einschließlich oder in Form von Steuer-Kommandos, ausgibt.

Falls diese an ein 2. Nachbearbeitungs-Modul (2. Nach-Modul) übergeben werden, erhält das 2. Nach-Modul ebenfalls vom F-Abschätz-Modul eine Abschätzung der zukünftigen Transport-Geschwindigkeit für den geplanten Zeitpunkt der Ausführung dieser Steuer-Kommandos, der nun zeitlich wesentlich weniger entfernt ist vom Abschätz-Zeitpunkt als bei der 1. Schätzung.

Insbesondere kann das 2. Nach-Modul für den nun relativ genau bekannten Ausführungs-Zeitpunkt des Steuer-Kommandos eine 2. Abschätzung der Transport-Geschwindigkeit vom F-Abschätz-Modul anfordern.

Differiert diese 2. Schätzung um mehr als einen vorgegebenen Toleranzwert von dem ursprünglich vom Real-Generator-Modul erhaltenen 1. Schätzung der Transport-Geschwindigkeit, so ist das 2. Nach-Modul in der Lage, diese Differenz zu berücksichtigen durch entsprechende Nachbesserung der Steuer-Kommandos, die das 2. Nach-Modul dann an die Anwendungs-Steuerung 100* weitergibt.

### BEZUGSZEICHENLISTE

- 1: Roboter
- 2: Oberarm
- 2': Schwenkachse
- 3: Unterarm
- 3': Schwenkachse
- 4: Hand, Hubsäule
- 4': Schwenkachse
- 5: Werkzeug, Sauger
- 6: Roboter-Basis
- 7 8 9 10: Transportrichtung
- 11: Querrichtung
- 12: Vertikale

- 100: Anwendungs-Umgebung, Verpackungs-Maschine, Roboter-Straße
- 100*: Steuerung, Anwendungs-Steuerung
- 101: Produkt-Band
- 102: Schlitten
- 103: Scanner
- 104: Quertraverse
- 105: Fahrschiene

- K: Karton, Umverpackung
- P: Produkt
- AA: Arbeit-Auftrag
- Auslese-Modul: Puffer-Auslese-Modul
- BA: Bewegungs-Abschnitt
- ABD: Abschnitts-Bewegung-Daten
- Daten-Modul: Bewegungs-Daten-Modul
- F-Steuer-Modul: Förderband-Steuerungs-Modul
- F-Abschätz-Modul: Fördergeschwindigkeit-Abschätz-Modul
- Generator-Modul: Arbeits-Auftrags-Generator-Modul
- KI: künstliche Intelligenz
- KNN: künstliches neuronales Netz
- Nach-Modul: Nachbearbeitungs-Modul
- Ref-Modul: Puffer-Referenzwert-Generator-Modul
- Stopp-Modul: Stopp-Sequenz-Generator-Modul
- Manage-Modul: Puffer-Management-Modul
- Vor-PC: Vorberechnungs-Rechner
- S: Startpunkt
- Z: Zielpunkt

## Patentansprüche

1. **Verfahren** zum Steuern der Bewegung eines in einer (realen) Anwendungs-Umgebung (100) wie einer Verpackungs-Maschine (100) eingesetzten realen Roboters (1) durch Steuern der Antriebe der relativ zueinander beweglichen Teile des Roboters (1),
**dadurch gekennzeichnet, dass**
A) in einer Vorberechnungs-Umgebung aus einer Vielzahl von beispielhaften Arbeits-Aufträgen und den diese beschreibenden Auftrags-Daten jeweils beispielhafte Vorberechnungs-Bewegungs-Abschnitte (V-BA) erstellt werden, für die - entsprechend vorgegebener Optimierungs-Parameter - optimierte Vorberechnungs-Bewegungsdaten in Form von Vorberechnungs-Abschnitts-Bewegungsdaten (V-ABD) in einem Vorberechnungs-Prozess ermittelt werden,
B) die beispielhaften Abschnitts-Bewegungsdaten (ABD) als Trainings-Daten in eine künstliche Intelligenz (KI), insbesondere ein mit Machine-Learning-Verfahren trainierbares Machine-Learning-Modell (MLM), welches insbesondere ein künstliches neuronales Netz (KNN) umfasst, eingegeben werden,
- die KI damit trainiert wird,
C) in der Anwendungs-Umgebung bei Auftauchen eines Arbeits-Auftrages (AA) mit einem oder mehreren Bewegungs-Abschnitten (BA), insbesondere Vorgeben eines Arbeits-Auftrages (AA) durch einen Nutzer,
- die Auftrags-Daten als Anfragegrößen in die trainierte KI eingegeben werden,
- die von der KI als Antwort erhaltenen Antwortgrößen als Abschnitts-Bewegungsdaten (ABD) oder Roh-Abschnitts-Bewegungsdaten (RABD) für diesen wenigstens einen Bewegungs-Abschnitt (BA) weiterverwendet werden,
D) die Abschnitts-Bewegungsdaten (ABD) versehen mit einem zeitlichen und/oder örtlichen oder anderem Start-Kriterium in einem Daten-Puffer abgelegt werden,
E) bei Erreichen des Start-Kriteriums in den Auftrags-Daten eines-Auftrages, insbesondere des betreffenden Roboters, der Roboter den Bewegungs-Abschnitt (BA) vollzieht durch Ansteuern seiner Antriebe durch Steuer-kommandos, die in den Abschnitts-Bewegungsdaten (ABD) enthalten sind,
F) insbesondere die Ermittlung von Steuer-Kommandos für die Antriebe aus den Abschnitts-Bewegungsdaten (ABD) im Schritt A, C oder E erfolgt.

2. Verfahren nach Anspruch 1,
**dadurch gekennzeichnet, dass**
- der Vorberechnungs-Prozess außerhalb der Anwendungs-Umgebung in einer davon getrennten Vorberechnungs-Umgebung durchgeführt wird,
- insbesondere vor der 1. Inbetriebnahme der Anwendungs-Umgebung oder eines neuen Werkzeuges oder eines neuen Roboters mit geänderten Eigenschaften in der Anwendungs-Umgebung,
- insbesondere der Vorberechnungs-Prozess durch eine künstliche Intelligenz (KI) erfolgt.

3. Verfahren nach einem der vorhergehenden Ansprüche,
**dadurch gekennzeichnet, dass**
zwischen Schritt C) und Schritt D) in einem Nachbearbeitungs-Schritt N)
- die möglicherweise noch nicht ausreichend exakten Antwortgrößen nachbearbeitet werden in exakte Abschnitts-Bewegungsdaten (ABD)
und/oder
- die Steuerkommandos für die Antriebe aus dem Abschnitts-Bewegungs-daten (ABD) oder Roh-Abschnitts-Bewegungsdaten (RABD) ermittelt werden.

4. Verfahren nach einem der vorhergehenden Ansprüche,
**dadurch gekennzeichnet, dass**
die Nachbearbeitung erfolgt unter Berücksichtigung von
- bestehenden Inkonsistenzen zwischen den Antwortgrößen der KI und den Gegebenheiten in der Anwendungs-Umgebung und/oder des zu erfüllenden Arbeits-Auftrages,
- Grenzwerten die durch den mechanischen und elektrischen Aufbau der Anwendungs-Umgebung, insbesondere des Roboters, gegeben sind,
- dem Systemverhalten der Anwendungsumgebung, beispielsweise dessen Schwingungsverhalten oder Dämpfungsverhalten oder Temperatur-Dehnungsverhalten, dessen diesbezüglichen Zustandsgrößen oder daraus abgeleiteten Größen, insbesondere um diese günstig zu beeinflussen.
(Zu A:)

5. Verfahren nach einem der vorhergehenden Ansprüche,
**dadurch gekennzeichnet, dass**
im Schritt A)
- wenigstens ein Optimierungs-Parameter vorgegeben wird, insbesondere die Minimierung der Bewegungs-Zeit, die zum Absolvieren des Bewegungs-Abschnittes (BA) benötigt wird,
- bei Vorgabe mehrerer Optimierungs-Parameter eine Gewichtung oder Priorisierung unter den mehreren Optimierungs-Parametern vorgegeben wird.

6. Verfahren nach einem der vorhergehenden Ansprüche,
**dadurch gekennzeichnet, dass**
- die im Schritt A) ermittelten Trainings-Bewegungs-Abschnitte (BA) und/oder die zugehörigen Trainings-Abschnitts-Bewegungsdaten (ABD) aufgrund von Erfahrungen, insbesondere in Form von in der Anwendungs-Umgebung bei Durchführung des Schrittes E ermittelten physikalischen Parametern, verändert, insbesondere optimiert, werden,
- insbesondere während der Durchführung des Schrittes E,
- die geänderten Abschnitts-Bewegungsdaten (ABD) gemäß Schritt B zum weiteren Trainieren der KI verwendet werden, insbesondere während der weiteren Durchführung des Arbeitsauftrages,
- von da an die weiter trainierte KI im Schritt C in der Anwendungsumgebung genutzt wird.

7. Verfahren nach einem der vorhergehenden Ansprüche,
**dadurch gekennzeichnet, dass**
im Schritt A)
für die Ermittlung der Abschnitts-Bewegungs-Daten (ABD)
- außer der Start-Parameter in Form der Start-Position und Start-Drehlage
- sowie der Ziel-Parameter in Form der Ziel-Position und Ziel-Drehlage des Werkzeuges möglichst viele
- Begleit-Parameter, die die Begleit-Umstände des Werkzeuges des Arbeitsauftrages beschreiben, zur Verfügung gestellt werden wie etwa
- Geschwindigkeit und/oder Beschleunigung und/oder Richtung bei Ankunft des Werkzeuges (5) an der Start-Position (S) und/oder
- Geschwindigkeit und/oder Beschleunigung und/oder Richtung bei Abfahrt des Werkzeuges (5) von der Ziel-Position (Z).
(Berücksichtigung von Umgebungseigenschaften:)

8. Verfahren nach einem der vorhergehenden Ansprüche,
**dadurch gekennzeichnet, dass**
als Begleit-Parameter Umgebungseigenschaften der Anwendungs-Umgebung zur Verfügung gestellt werden wie etwa
- Elastizität und/oder Nachgiebigkeit der Antriebe und/oder
- Wechselwirkungen zwischen Robotern und/oder
- Belastungs-Grenzwerten, insbesondere für Lagerstellen und Linearführungen, der Anwendungs-Umgebung, insbesondere des Roboters (1),
- Temperatur-Dehnungsverhalten der Anwendungs-Umgebung, insbesondere des Roboters (1).
(Berücksichtigung von Schwingungen:)

9. Verfahren nach einem der vorhergehenden Ansprüche,
**dadurch gekennzeichnet, dass**
als Begleit-Parameter Informationen zum Schwingungsverhalten und/oder zum Dämpfungsverhalten der Anwendungs-Umgebung zur Verfügung gestellt werden durch
- Hinterlegen eines Schwingungs-Modells für die Anwendungs-Umgebung, oder
- Erstellen eines Schwingungs-Modells für die Anwendungs-Umgebung auf Basis eingegebener, insbesondere konstruktiver, Daten der Anwendungs-Umgebung oder auf Basis von aus Maschinendaten ermittelten Modellen, z.B. Machine-Learning-Modellen.
(Berücksichtigung von Belastungen:)

10. Verfahren nach einem der vorhergehenden Ansprüche,
**dadurch gekennzeichnet, dass**
als Begleit-Parameter Belastungs-Grenzwerte zur Verfügung gestellt werden durch
- Hinterlegen eines Belastungs-Modells für die Anwendungs-Umgebung, oder
- Erstellen eines Belastungs-Modells für die Anwendungs-Umgebung auf Basis eingegebener, insbesondere konstruktiver, Daten der belasteten Teile der Anwendungs-Umgebung oder auf Basis von aus Maschinendaten ermittelten Modellen, z.B. Machine-Learning-Modellen.

11. Verfahren nach einem der vorhergehenden Ansprüche,
**dadurch gekennzeichnet, dass**
- die im Schritt A für die Ermittlung der Trainings-Abschnitts-Bewegung-Daten (ABD) verwendeten Begleit-Parameter aufgrund von Erfahrungen, insbesondere in Form von in der Anwendungs-Umgebung bei Durchführung des Schrittes E ermittelten physikalischen Parametern, verändert, insbesondere optimiert, werden,
- Insbesondere während der Durchführung des Schrittes E,
- die mittels der geänderten Begleit-Parameter neu ermittelten, geänderten Trainings-Abschnitts-Bewegungsdaten (ABD) gemäß Schritt B zum weiteren Trainieren der KI verwendet werden, insbesondere während der weiteren Durchführung des Arbeitsauftrages,
- von da an die weiter trainierte KI im Schritt C in der Anwendungsumgebung genutzt wird.
(Zu B:)

12. Verfahren nach einem der vorhergehenden Ansprüche,
**dadurch gekennzeichnet, dass**
insbesondere im Schritt B)
die KI als ausreichend trainiert betrachtet und das Training beendet wird, wenn
- bei Eingabe von Auftrags-Daten aus den Trainings-des Schrittes A) als Anfragegrößen an die KI,
- die von der KI erhaltenen Antwortgrößen in einem vorgegebenen Toleranzbereich um die Abschnitts-Bewegungsdaten (ABD) liegen, die im Schritt A) aus diesen Trainings-Auftrags-Daten errechnet wurden.
(Zu C/D:)

13. Verfahren nach einem der vorhergehenden Ansprüche,
**dadurch gekennzeichnet, dass**
- im Schritt C) die Antwort-Größen auch Bereichsangaben als Bewegungs-daten (ABD) enthalten können,
und/oder
- die Abschnitts-Bewegungsdaten (ABD) mit einem zeitlichen und/oder örtlichen Bezug insbesondere mit einem zeitlichen und/oder örtlichen Vorlauf, im Daten-Puffer abgelegt werden.

14. Verfahren nach einem der vorhergehenden Ansprüche,
**dadurch gekennzeichnet, dass**
im Schritt D)
- die Abschnitts-Bewegungsdaten (ABD) für einen Bewegungs-Abschnitt (BA) im Daten-Puffer am - zeitlichen oder örtlichen - Ende eine optionale Abbrems-Sequenz, insbesondere Stopp-Sequenz für das abbremsen, insbesondere Anhalten des Werkzeuges (5) umfasst
oder
- erst bei der Abarbeitung eine solche Abbrems-Sequenz, insbesondere Stopp-Sequenz erzeugt wird, beispielweise in einem Referenz-Generator-Modul.
(Zu E:)

15. Verfahren nach einem der vorhergehenden Ansprüche,
**dadurch gekennzeichnet, dass**
im Schritt E)
für den Fall, dass für das Ende eines in Durchführung befindlichen Bewegungs-Abschnittes (BA) keine Bewegungs-Daten für einen nachfolgenden Bewegungs-Abschnitt (BA) vorhanden sind und dieser nicht im Stillstand endet, der Roboter (1) angehalten wird entsprechend der in den Bewegungs-Daten des in Durchführung befindlichen Bewegungs-Abschnittes (BA) enthaltenen Stopp -Sequenz.
(Allgemein:)

16. Verfahren nach einem der vorhergehenden Ansprüche,
**dadurch gekennzeichnet, dass**
- für den Roboter in der Anwendungs-Umgebung als Bewegungs-Abschnitt wenigstens ein Bewegungs-Grundtyp festgelegt wird,
- insbesondere alle Bewegungs-Abschnitte (BA) im Schritt A) einen dieser Bewegungs-Grundtypen subsummierbar sind,
und/oder
- insbesondere alle durch die im Schritt D) erzeugten Bewegungs-Daten beschriebenen Bewegungs-Abschnitte (BA) unter einen dieser Bewegungs-Grundtypen subsummierbar sind.

17. Verfahren nach einem der vorhergehenden Ansprüche,
**dadurch gekennzeichnet, dass**
die vermutete (Transportgeschwindigkeit und/oder -Beschleunigung der als Aufnahme-Stelle, und/oder als Ablage-Stelle dienenden Bänder oder der Produkte selbst mit räumlicher Position und Drehlage
a) entweder bereits bei der Ermittlung der Trainings-Bewegungs-Daten im Schritt A) als einer der Umgebungs-Parameter berücksichtigt wird,
b) oder erst nach der Ausgabe der Ausgabegrößen aus der KI im Schritt C), spätestens bei der Ermittlung der Steuerkommandos für die Antriebe im Schritt E), berücksichtigt wird,
- insbesondere gemäß a) die vermutete Transportgeschwindigkeit und/oder
- Beschleunigung berücksichtigt wird und am Beginn des realen Bewegungs-Abschnitts (BA) mit der realen Transportgeschwindigkeit und/oder
- Beschleunigung verglichen und bei einer Differenz über einer Toleranzgrenze die Steuerkommandos unter Berücksichtigung der Differenz nachberechnet werden.

18. Roboter-**Anwendungssystem** mit
- einer Anwendungs-Umgebung (100), insbesondere einer Verpackungs-Maschine (100), etwa in Form einer Roboter-Straße (100), umfassend
- wenigstens einen Roboter (1),
- eine Anwendungs-Steuerung (100*) zum Steuern der beweglichen Teile der Anwendungs-Umgebung (100), insbesondere der Antriebe der beweglich miteinander verbundenen Teile des wenigstens einen Roboters (1) relativ zueinander,
**gekennzeichnet durch**
- einen Vorberechnungs-Rechner, in dem aus Trainings-Auftrags-Daten jeweils Trainings-Bewegungs-Abschnitte (BA) des Roboters (1) festgelegt und dafür optimierte Trainings-Abschnitts-Bewegungsdaten ermittelt werden,
- eine künstliche Intelligenz (Kl), insbesondere mit wenigstens einem künstlichen neuronalen Netz, und/oder insbesondere einem Trainings-Algorithmus, welche in der Lage ist, mit Hilfe der Trainings-Bewegungs-Abschnitte (BA) und der daraus errechneten optimierten Trainings-Bewegungs-Daten die KI zu trainieren.

19. Roboter-Anwendungssystem nach Anspruch 18,
**dadurch gekennzeichnet, dass**
die Anwendungs-Steuerung (100*) umfasst
- ein Arbeits-Auftrags-Generator-Modul (Generator-Modul), welches in der Lage ist, z.B. aufgrund von Eingaben des Benutzers oder zufallsbedingt, beispielhafte, konkrete Arbeits-Aufträge (AA) für jeden einzelnen Roboter (1) zu erstellen und als Anfragegröße in die trainierte KI einzugeben,
und/oder
- ein Bewegungsdaten-Modul (Daten-Modul), welches in der Lage ist, Antwortgrößen der KI entgegenzunehmen und daraus Abschnitts-Bewegungsdaten (ABD) zu erzeugen, insbesondere mit oder in Form von Steuerkommandos für die Antriebe des wenigstens einen Roboters,
und/oder
- ein 1. Nachbearbeitungs-Modul (1. Nach-Modul), um die vom Daten-Modul erzeugten Bewegungs-Daten (ABD) gegebenenfalls nachzubearbeiten, beispielsweise um Inkonsistenzen mit der realen Anwendungs-Umgebung, insbesondere im betreffenden Bewegungs-Abschnitt (BA), zu beseitigen,
und/oder
- ein Puffer-Referenzwert-Generator-Modul (Ref-Modul), welches in der Lage ist die vorberechneten Bewegungen so zu manipulieren oder Informationen hierfür bereitzustellen, dass beispielsweise ein Abbremsen und Beschleunigen innerhalb der vorberechneten Bewegungsabschnitte (oder über mehrere Bewegungsabschnitte hinaus) ermöglicht wird. Die Manipulation kann hierbei wieder verschiedene Zielkriterien berücksichtigen, wie z.B. geringe Drehmomente oder eine Schwingungsvermeidung. Ferner kann der Referenzwert-Generator selbst wiederum aus einer trainierten KI bestehen, die als Eingang die vorberechneten Bewegungsabschnitte und ggf. detailliertere Größen der Anwendungsumgebung berücksichtigt,
und/oder
- ein Stopp/Abbrems-Sequenz-Generator-Modul (Stopp-Modul), welches in der Lage ist, eine Abbrems-Sequenz, insbesondere eine Stopp-Sequenz für einen Bewegungs-Abschnitts-Datensatz (ABD) zu erzeugen,
und/oder
- ein Puffer- Management-Modul (Manage-Modul), welches in der Lage ist, das Einbringen, Abspeichern und gegebenenfalls Sortieren und Ausbringen von Abschnitts-Bewegungsdaten (ABD), insbesondere Datensätzen (ABD), im Puffer zu organisieren,
und/oder
- ein Puffer-Auslese-Modul (Auslese-Modul), welches in der Lage ist, das Auslesen von Abschnitts-Bewegungsdaten(ABD), insbesondere Datensätzen (ABD), aus dem Puffer durchzuführen und insbesondere diese ggf. entsprechend von Eingabegrößen zu manipulieren,
und/oder
- ein Förderband-Steuerungs-Modul (F-Steuer-Modul), welches die entsprechenden Förderer für Produkte und/oder Behälter, seiner Förderbänder oder andere Bauformen von Förderern, steuert,
und/oder
- Fördergeschwindigkeits/-Beschleunigungs-Abschätz-Modul (F-Abschätz-Modul), welches in der Lage ist, die Geschwindigkeit des Förderers zu definierten Zeitpunkten oder Funktionszuständen der Anwendungs-Umgebung in der Zukunft abzuschätzen,
und/oder
- ein 2. Nachbearbeitungs-Modul (2. Nach-Modul), um die aus dem Daten-Puffer ausgegebenen oder ausgelesenen Bewegungs-Daten (ABD) nachzubearbeiten, insbesondere im Fall einer Differenz zwischen den bei der Erstellung dieser Bewegungs-Daten (ABD) unterstellten Geschwindigkeit und einer aktuell gemessenen oder nun besser abschätzbaren Fördergeschwindigkeit/Beschleunigung.
